(19) Europäisches Patentamt
European Patent Office
Office européen des brevets

(11) Publication number : **0 444 542 B1**

(12) # EUROPEAN PATENT SPECIFICATION

(45) Date of publication of patent specification : **20.10.93 Bulletin 93/42**

(51) Int. Cl.$^5$ : **E21B 33/13,** C04B 24/00

(21) Application number : **91102594.8**

(22) Date of filing : **22.02.91**

(54) **Cementing compositions containing polyethyleneimine phosphonate derivatives as dispersants.**

(30) Priority : **02.03.90 US 487469**

(43) Date of publication of application : **04.09.91 Bulletin 91/36**

(45) Publication of the grant of the patent : **20.10.93 Bulletin 93/42**

(84) Designated Contracting States : **DE FR GB NL**

(56) References cited :
**EP-A- 0 146 171**
**EP-A- 0 166 798**
**GB-A- 2 157 279**
**CHEMICAL ABSTRACTS, vol. 111, no. 16, 16th October 1989, page 336, abstract no. 139554n, Columbus, Ohio, US; & SU-A-1 488 274 (KAZAN CONSTRUCTION ENGINEERING INSTITUTE), 23-06-1989**

(73) Proprietor : **BASF Corporation**
**9 Campus Drive**
**Parsippany, NJ 07054 (US)**

(72) Inventor : **Crema, Stefano C.**
**4960 Lakeridge**
**Ypsilanti, Michigan 48197 (US)**
Inventor : **Kucera, Clare H.**
**6714 S. Utica, Apt. 2003**
**Tulsa, Oklahoma 74136 (US)**
Inventor : **Gousetis, Charalampos, Dr.**
**98 Carl-Bosch-Strasse**
**W-6700 Ludwigshafen (DE)**
Inventor : **Oppenlaender, Knut, Dr.**
**23 Otto-Dill-Strasse**
**W-6700 Ludwigshafen (DE)**

(74) Representative : **Michaelis, Wolfgang, Dr. et al**
**BASF Aktiengesellschaft, Patentabteilung**
**ZDX - C 6**
**D-67056 Ludwigshafen (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 444 542 B1

## Description

The present invention relates to an aqueous cementing composition. More particularly, the present invention relates to salt containing cementing compositions which contain polyethyleneimine phosphonate derivatives as cement slurry dispersants.

The polyethyleneimine phosphonate derivatives are of the general structure

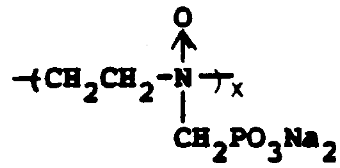

wherein x = 10 or more

or

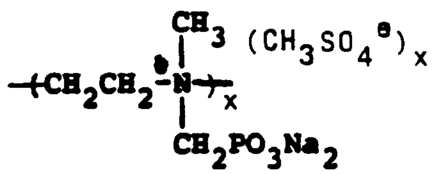

wherein x = 10 or more

and mixtures thereof.

The incorporation of polyethyleneimine phosphonate derivatives as dispersant additives in salt containing cement slurries used in the cementing of oil and gas wells, allows slurries to be pumped in turbulent flow, a condition which aids in the removal of residual drilling mud and therefore improves the cementing bond to the producing formation.

The dispersant of the present invention may be present in an amount of 0.05 to 1.0% by weight of cement (BWOC).

The incorporation of polyethyleneimine phosphonate derivatives of the present invention into cement slurries greatly improves flow behavior of cement in oil and gas well cementing operations and allows for slurries to be pumped in turbulent flow, thereby effecting a more efficient bonding between the oil or gas well liners and the rock formations.

Oil well cementing and other underground cementing operations often require placement of a slurry of cement, water and other additives in a porous environment such as porous earthen or rock strata. For example, cement compositions are routinely used in the oil and gas industry to cement the annular space in the well bore between the surrounding formation and the pipe or casing. Typically, the cement slurry is pumped down the inside of the casing and back up the outside of the casing through the annular space. The slurry is allowed to set up or harden in the annular space, thereby forming a rigid column which ideally forms a bond with the earth or rock formations as well as with the metal pipe or casing. To achieve a satisfactory primary cementing job, it is essential to achieve a tight bond to prevent vertical communication of fluids or gas along or within the column, which could contaminate the producing zone, or permit a loss of reserves.

The primary functions of the cementing process are to restrict fluid movement between geological formations and to bond and support the casing or metal pipe. In addition, the cement aids in protecting the casing from corrosion, preventing "blow-outs" by quickly sealing formations, protecting the casing from shock loads in drilling deeper wells and sealing off lost circulation or thief zones.

Dispersants are used to improve the flow properties of cement slurries used in completion of oil and gas wells. The improved flow behavior allows slurries to be pumped in turbulent flow, a condition which aids in the removal of residual drilling mud and therefore cement bonding to the producing formation. In addition, the thinning action of the dispersant makes it possible to mix dense slurries of over 20 lbs./gallon, which otherwise would be too viscous to be mixed in existing field equipment.

The most commonly used dispersant are usually sodium salts of sulfonated naphthalene/formaldehyde condensates. Representative among these is LOMAR® D, manufactured by the Diamond Shamrock Company. It has been a long standing problem in the art to arrive at a suitable dispersant for cement systems which contains a high level of salt, such as NaCl. The salts aid in bonding the cement to salt containing geological structures Because of the high ionic strength of the salt cement slurries, dispersants such as LOMAR® D have been unsatisfactory in such cement slurries.

It is the object of the invention to overcome these drawbacks.

The present invention relates to salt containing cementing compositions and more particularly to dispersant additives which may be incorporated into such cement compositions. The salt containing cement compositions are useful in cementing operations in oil and gas wells and are comprised of water, salt containing hydraulic cement, fluid loss additives if desired, and a dispersant based on polyethyleneimine phosphonates.

Polyethyleneimine phosphonate derivatives useful in the present invention are those having the general structure

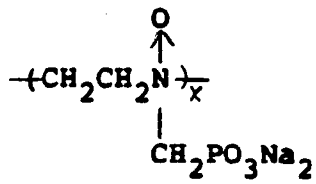

wherein x is a number of 10 or more,

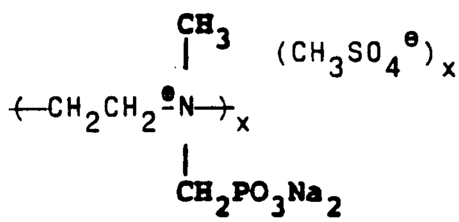

wherein x is 10 or more
and mixtures thereof.

Polyethyleneimine phosphonate derivatives are disclosed for use in oil, gas and water cement compositions as dispersants, which are as effective as conventional sulfonated dispersants, such as LOMAR® D, and which are clearly more effective as dispersants in cement compositions having high salt concentrations. NaCl inhibits the action of conventional dispersants such as LOMAR® D.

The polyethyleneimine phosphonate derivatives useful in the present invention have the general formula

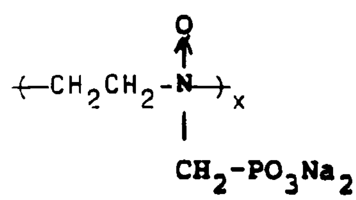

wherein x is 10 or more

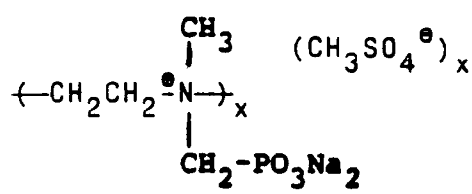

wherein x is number 10 or more,
and mixture thereof.

The polyethyleneimine phosphonate derivatives of the present invention are made by condensing polyethyleneimine with a phosphonate in the manner which is well known to those skilled in the art.

The dispersants can be added to the cement composition in dry, solution or emulsion form in an amount

of from 0.05 to 1.0% by weight of the cement (BWOC).

The result of the inclusion of the dispersion additives of the present invention are improved pumpability of the cement which generally improves drilling fluid removal and reduced possibility of lost circulation, when cementing a conduit penetrating a permeable earthen formation.

The cement component of the cement composition of this invention may be any of the API classes of cement or cement blends, as are defined in the American Petroleum Institute Bulletin entitled "API Specification for Material and Testing for Well Cements," Third Edition, dated July 1, 1986 ("API Spec. 10"). These include cements defined as Classes A through H in API Spec. 10.

The cement compositions may also include at least one inorganic salt. Suitable salts include inorganic monovalent and polyvalent metal salts, such as magnesium chloride, ammonium chloride, sodium and potassium chloride and calcium chloride

Other additives conventionally added to cement compositions useful in cementing casings in the bore hole of a well can also be added to the cement compositions of this invention in the amount which are normally used by those skilled in the art. These additives may include, for example, (1) heavy weight additives, such as hematite, ilmenite, silica flour and sand; (2) cement retarders such as lignins and lignosulfonates; and (3) additives for controlling lost circulation; such as walnut hulls and cellophane flakes.

The following examples are presented in order to illustrate various aspects of the invention.

In the following Examples, all cement slurries were prepared according to API Spec. 10, Third Edition, July 1, 1986.

Table I is an explanation of the symbols and abbreviations used in the tables containing the data of the examples. The symbols and abbreviations used therein are standard in the art and are well known to those of ordinary skill in the art.

In Table II, the rheology of cement slurries containing 18% NaCl By Weight of Water is determined by calculating their Plastic Viscosity (PV) and the Yield Point (YP). The effectiveness of a dispersant under the conditions of use can be assessed by examining its effect on these two parameters. A dispersant ineffective in salt cements will result in the increase of the PV and YP and reduction of the pumpability of the slurry. In the most extreme case, complete gelation will result which will make placement of the slurry impossible.

As seen in the examples, dispersants based on naphthalene sulfonate formaldehyde condensates as LOMAR® D cause complete gelation of cement slurries containing 18% NaCl BWOW. On the other hand, slurries containing low molecular weight Polymin Phosphonate dispersants have a low PV and YP allowing their easy placement in the formation. An increase in the Molecular Weight of the Polymin moiety reduces the effectiveness of the dispersant mainly by increasing the YP of the slurries. In all cases, however, the new dispersants claimed in the invention are more effective than the polynaphthalene sulfonate condensates tested.

TABLE I

KEY TO TABLE II

Compound I = 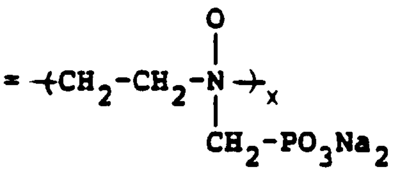 x = 10, 37% active

Compound II = 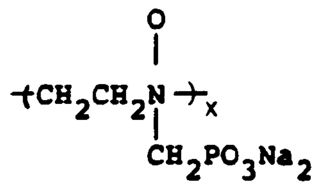 x = 100, 44% active

Compound III = 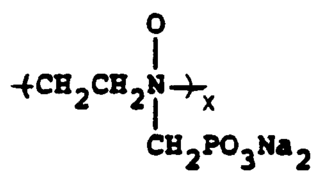 x >>1000, 43% active

Compound IV = 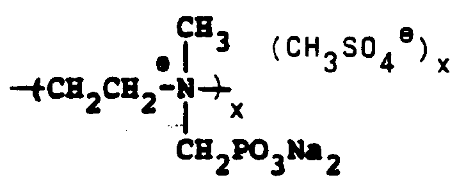 x = 10, 50% active

## TABLE II

**EFFECTIVENESS OF PHOSPHONATE DERIVATIVES AS CEMENT DISPERSANTS**

**TEXAS LEHIGH CLASS H, 38% WATER, 26.7°C**

| TEST NO. | COMPOUND | %BWOC (1) | 18% NaCl BWOW (2) | FANN 300/100 | BINGHAM PV(3) | BINGHAM ty(4) |
|---|---|---|---|---|---|---|
| 1 | Blank | | - | 243/138 | 158 | 0.351 |
| 2 | Blank | | yes | 129/93 | 54 | 0.607 |
| 3 | LOMAR® D | 0.25 | - | 114/72 | 63 | 0.320 |
| 4 | LOMAR® D | 0.25 | yes | gelled immediately | | |
| 5 | I | 0.25 | - | 78/54 | 36 | 0.320 |
| 6 | I | 0.25 | yes | 54/30 | 36 | 0.064 |
| 7 | II | 0.25 | - | 183/153 | 45 | 1.310 |
| 8 | III | 0.25 | - | 138/114 | 36 | 0.959 |
| 9 | IV | 0.25 | - | 117/108 | 14 | 1.054 |
| 10 | IV | 0.125 | - | 123/96 | 41 | 0.735 |
| 11 | IV | 0.25 | yes | 57/30 | 41 | 0.032 |

(1) By weight of cement
(2) By weight of water
(3) Plastic viscosity in CpS
(4) Yield point in lbs./ft$^2$

## Claims

1. A cementing composition useful in salt formations for cementing oil, gas and water wells, comprising:
(a) water
(b) hydraulic cement; and
(c) a polyethyleneimine phosphonate derivative dispersant selected from the group consisting of

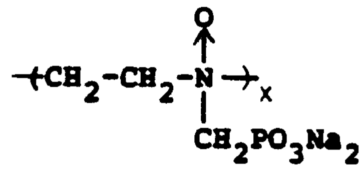

wherein x is a number 10 or more;

or

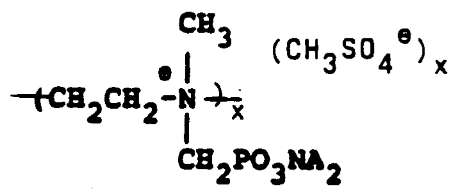

wherein x is 10 or more

and mixtures thereof.

2. The composition of claim 1, wherein the dispersant is present in an amount of 0.05 to 1.0% by weight of cement.

3. The composition of claim 1, wherein the salt formation is a NaCl salt formation.

4. The composition of claim 1, further including fluid loss additives.

5. The composition of claim 1, further including an additional dispersant selected from the group consisting of lignosulfonates, sodium or potassium salts of a sulfonated naphthalene formaldehyde condensate, sodium salts of ketone sulfonate formaldehyde condensate, and mixtures thereof.

6. Use of a polyethyleneimine phosphonate derivative selected from the group consisting of

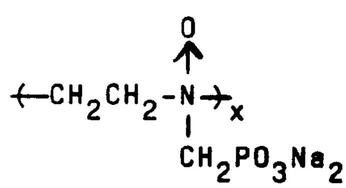

wherein x is a number 10 or more;

or

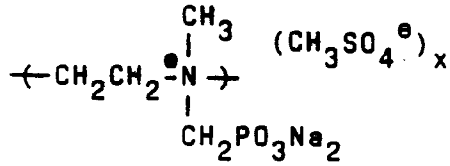

wherein x is 10 or more

and mixtures thereof,

in small amounts as a dispersant in water and hydraulic cement containing cementing compositions.

## Patentansprüche

1. Zementzusammensetzung zur Zementierung von Öl-, Gas- und Wasserbohrlöchern in Salzformationen, enthaltend:
   (a) Wasser,
   (b) hydraulischen Zement und
   (c) als Dispergiermittel ein Polyethyleniminphosphonatderivat ausgewählt aus der Gruppe bestehend aus

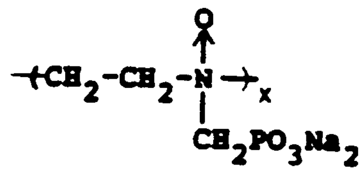
,

worin x für eine Zahl gleich oder größer 10 steht,
oder

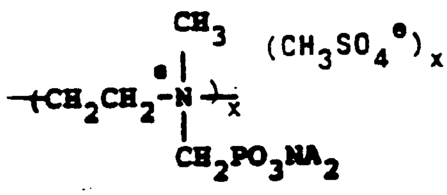
,

worin x für eine Zahl gleich oder größer 10 steht,
und deren Mischungen.

2. Zementzusammensetzung nach Anspruch 1, dadurch gekennzeichnet, daß das Dispergiermittel darin in einer Menge von 0,05 bis 1,0 Gew.-%, bezogen auf Zement, vorliegt.

3. Zementzusammensetzung nach Anspruch 1, dadurch gekennzeichnet, daß es sich bei der Salzformation um eine solche aus NaCl handelt.

4. Zementzusammensetzung nach Anspruch 1, dadurch gekennzeichnet, daß sie zusätzlich den Flüssigkeitsverlust verhindernde Zusatzstoffe enthält.

5. Zementzusammensetzung nach Anspruch 1, dadurch gekennzeichnet, daß sie zusätzlich ein weiteres Dispergiermittel enthält, und zwar ein solches ausgewählt aus der Gruppe bestehend aus Ligninsulfonaten, Natrium- oder Kaliumsalzen von sulfonierten Naphthalin-formaldehydkondensationsprodukten, Natriumsalzen von Ketonsulfonatformaldehydkondensationsprodukten und deren Mischungen.

6. Verwendung eines Polyethyleniminphosphonatderivats ausgewählt aus der Gruppe bestehend aus

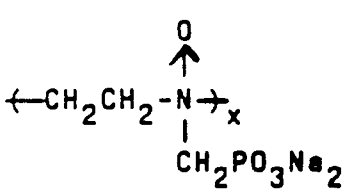
,

worin x für eine Zahl gleich oder größer 10 steht,
oder

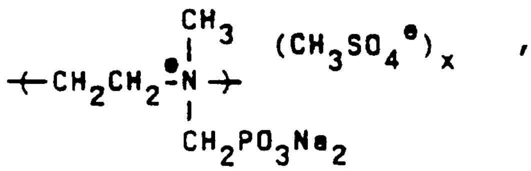

worin x für eine Zahl gleich oder größer 10 steht,
und deren Mischungen,
in kleinen Mengen als Dispergiermittel in Wasser und hydraulischen Zement enthaltenden Zementzusammensetzungen.

## Revendications

1. Composition de cimentation, utilisable dans des formations salines pour la cimentation de puits de pétrole, de gaz et d'eau, comprenant
   (a) de l'eau,
   (b) du ciment hydraulique et
   (c) un additif dispersant dérivé de polyéthylèneiminephosphonate choisi dans le groupe constitué par

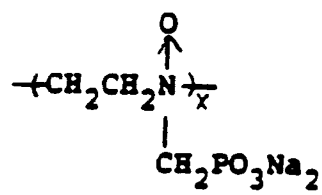

où x est un nombre égal ou supérieur à 10
et

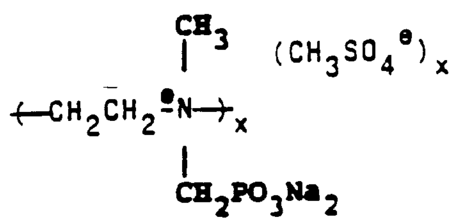

où x est un nombre égal ou supérieur à 10,
et par des mélanges de ceux-ci.

2. Composition selon la revendication 1, dans laquelle l'additif dispersant est présent dans une proportion de 0,05 à 1,0% en poids du ciment.

3. Composition selon la revendication 1, dans laquelle la formation saline est une formation de sel NaCl.

4. Composition selon la revendication 1, contenant en outre des réducteurs de filtrat.

5. Composition selon la revendication 1, contenant en outre un additif dispersant supplémentaire, choisi dans le groupe constitué par les lignosulfonates, les sels de sodium ou de potassium d'un produit de condensation naphtalène formaldéhyde sulfoné, les sels de sodium d'un produit de condensation sulfonate de cétone formaldéhyde et par des mélanges de ceux-ci.

6. Utilisation d'un dérivé de polyéthyléne-imine-phosphonate choisi dans le groupe constitué par

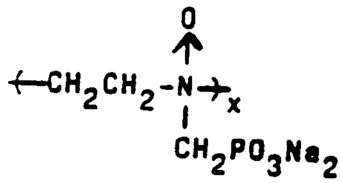

où x est un nombre égal ou supérieur à 10

ou

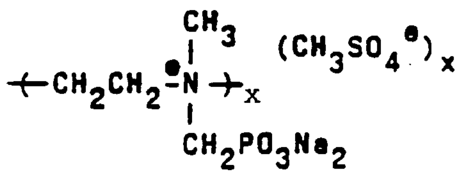

où x est un nombre égal ou supérieur à 10,

et par des mélanges de ceux-ci, en petites quantités comme additif dispersant dans des compositions de cimentation contenant de l'eau et du ciment hydraulique.